Europäisches Patentamt

European Patent Office

Office européen des brevets

(11) Veröffentlichungsnummer: 0 085 299

A2

(12) EUROPÄISCHE PATENTANMELDUNG

(21) Anmeldenummer: 83100095.5

(22) Anmeldetag: 07.01.83

(51) Int. Cl.³: B 62 D 55/28
B 62 D 55/20

(30) Priorität: 01.02.82 US 344669

(43) Veröffentlichungstag der Anmeldung:
10.08.83 Patentblatt 83/32

(84) Benannte Vertragsstaaten:
DE FR GB IT

(71) Anmelder: DEERE & COMPANY
1 John Deere Road
Moline Illinois 61265(US)

(72) Erfinder: Wohlford, William Paul
5102 Crow Creek Road
Bettendorf Iowa, 52722(US)

(74) Vertreter: Gramm, Werner, Prof. Dipl.-Ing. et al,
Patentanwälte Gramm + Lins Theodor-Heuss-Strasse 2
D-3300 Braunschweig(DE)

(54) Gleiskettenabschnitt einer endlosen Gleiskette.

(57) Ein Gleiskettenabschnitt (10) einer endlosen Gleiskette für ein Gleiskettenfahrzeug weist ein Raupenglied (12) mit einem Kettenrad-Eingriffssteg (22) auf, der aus einem Quersteg (24) besteht, der als massiver Halbzylinder ausgebildet ist und von einer Verschleißkappe 26 abgedeckt wird. Letztere ist in Form eines Teilzylinders ausgebildet und umgreift mit ihren freien Längsrändern (58, 60) den Quersteg (24) um mehr als 180°, wobei sich in montierter Lage der Verschleißkappe (26) deren freien Längsränder (58, 60) dicht oberhalb zweier benachbarter Gleiskettenschuhe (14) befinden, die lösbar an zwei nebeneinander angeordneten Raupengliedern (12) verbunden sind und als Lagesicherung für die Verschleißkappe (26) dienen.

FIG. 1

Croydon Printing Company Ltd.

# Patentanwälte GRAMM + LINS

Dipl.-Ing. Prof. Werner Gramm
Dipl.-Phys. Edgar Lins

**0085299**

D-3300 Braunschweig

DEERE & COMPANY

Moline, Illinois 61265

U S A

Telefon: (05 31) 8 00 79
Telex: C9 52 620

Anwaltsakte 324-55 EP-1
Datum 5.Jan.1983

"Gleiskettenabschnitt einer endlosen Gleiskette"

Die Erfindung betrifft einen Gleiskettenabschnitt einer endlosen, aus einer Vielzahl derartiger Gleisabschnitte bestehenden Gleiskette für ein Gleiskettenfahrzeug, bestehend aus einem mit einem Gleiskettenschuh verbundenen Raupenglied, das ein Paar mit Abstand nebeneinanderliegende Kettenlaschen aufweist, die durch zwei zum Eingriff in die Zahnlücken eines Kettenrades bestimmte Querstege miteinander verbunden sind, von denen der erste Quersteg eine sich um zumindest 180° erstreckende zylindrische Oberfläche aufweist, die von einer teilzylindrischen, im Querschnitt angenähert C-förmig ausgebildeten Verschleißkappe um mehr als 180° lösbar umgriffen ist.

Eine derartige Ausführungsform läßt sich der US-Patentschrift 4,129,045 entnehmen. Die zum Eingriff in die Zahnlücken eines Kettenrades bestimmten Querstege sind hier durch Buchsen gebildet, die in miteinander fluchtende Bohrungen der nebeneinanderliegenden Kettenlaschen eingepreßt sind. Durch die Buchsen sind Kettenbolzen gesteckt, die die gelenkige Verbindung zwischen zwei benachbarten Gleiskettenabschnitten herstellen. Zur Erhöhung der Lebensdauer ist jede dieser Buchsen von einer Verschleißkappe abgedeckt, die aus Federstahl besteht und die

- 2 -

Buchse um mehr als 180° federnd umgreift. Zur Montage und Demontage der Verschleißkappe werden deren freien Längsränder so
weit auseinandergespreizt, bis sich die Verschleißkappe von der
Buchse abziehen läßt.

Ein wesentlicher Nachteil dieser Konstruktion ist darin zu sehen,
daß die Verschleißkappe aufgrund des Erfordernisses einer ausreichenden Biegeelastizität nur einen verhältnismäßig dünnen
Materialquerschnitt aufweisen kann, was zur Verringerung der
Lebensdauer dieser Verschleißkappe führt. Nachteilig ist ferner,
daß zur Sicherung der montierten Verschleißkappe zusätzliche
Sicherungsmittel vorgesehen werden müssen, die die freien Ränder
der Verschleißkappe verriegeln.

Der Erfindung liegt somit die Aufgabe zugrunde, den eingangs erläuterten Gleiskettenabschnitt hinsichtlich seiner Lebensdauer
und seiner Konstruktion zu verbessern.

Diese Aufgabe wird gemäß der Erfindung dadurch gelöst, daß die
Höhe des ersten Querstegs kleiner ist als sein Zylinderdurchmesser und höchstens so groß ist wie der lichte Abstand zwischen
den freien Längsrändern der Verschleißkappe, deren einer Längsrand dicht oberhalb der Oberfläche des Gleiskettenschuhs desselben Gleiskettenabschnitts und deren anderer Längsrand dicht
oberhalb der Oberfläche des hinteren Endteils des benachbarten
Gleiskettenschuhs liegen.

Die Sicherung der Verschleißkappe in ihrer montierten Lage wird
somit unmittelbar von dem sowieso vorhandenen Gleiskettenschuh
übernommen, der eine Verdrehung der Verschleißkappe in der einen
Richtung verhindert, da er als Anschlag gegenüber dem einen
Längsrand der Verschleißkappe wirkt. Der Gleiskettenschuh des benachbarten Gleiskettenabschnitts bildet einen Anschlag für den
anderen Längsrand der Verschleißkappe und verhindert daher deren Drehung in der anderen Umfangsrichtung. Da die Querschnittsbreite des ersten Quersteges größer ist als der lichte Abstand zwischen den beiden Längsrändern der Verschleißkappe, läßt sich letztere nicht nach oben von dem ersten Quersteg abziehen.

Zur Demontage der Verschleißkappe muß lediglich ein Gleiskettenschuh abgeschraubt werden. Die Verschleißkappe läßt sich dann in Richtung des abgeschraubten Gleiskettenschuhs so weit verdrehen, bis der lichte Abstand zwischen den freien Längsrändern der Verschleißkappe dem kleinsten Querschnitt des ersten Quersteges gegenüberliegt. In dieser Stellung läßt sich dann die Verschleißkappe seitlich abziehen.

Bei der erfindungsgemäßen Ausführungsform braucht die Verschleißkappe somit keine federelastischen Eigenschaften aufzuweisen, kann daher einen dickeren Materialquerschnitt haben und erzielt somit eine längere Lebensdauer. Zusätzliche Sicherungselemente zur Arretierung der Verschleißkappe in ihrer montierten Lage entfallen. Das Auswechseln der Verschleißkappe kann ohne Zerlegung des Gleiskettenabschnittes und somit ohne Trennung der endlosen Gleiskette erfolgen. Denn der Gleiskettenschuh muß hierbei nicht vollständig entfernt werden; vielmehr reicht bereits ein Lösen eines Gleiskettenschuhs, um die erforderliche Verdrehung der Verschleißkappe durchführen zu können.

Eine besonders vorteilhafte Ausführungsform eines Gleiskettenabschnitts ist durch folgende zusätzliche Merkmale gekennzeichnet:

a) Ein Paar mit Abstand nebeneinanderliegende, angenähert rechteckig ausgebildete, biegeelastische Biegeelemente, die im Bereich ihrer sich jeweils gegenüberliegenden Enden erste und zweite Bohrungspaare aufweisen;

b) das Raupenglied sowie der Gleiskettenschuh spannen zwischen sich die Enden zweier aufeinanderfolgender Biegeelementepaare ein, wobei das erste Bohrungspaar des einen Biegeelementenpaares mit dritten und vierten Bohrungspaaren und das zweite Bohrungspaar des folgenden Biegeelementenpaares mit fünften und sechsten Bohrungspaaren im Gleiskettenschuh und Raupenglied fluchten;

c) erste und zweite Paare von Verbindungsmitteln sind durch die miteinander fluchtenden Bohrungen des Gleiskettenschuhs, der Biegeelemente sowie des Raupengliedes geführt und spannen Raupenglied und Gleiskettenschuh beidseitig gegen die Biegeelemente;

d) der erste, im Querschnitt angenähert halbkreisförmig ausgebildete Quersteg des Raupengliedes liegt zwischen den beiden Biegeelementen eines Paares.

In der Zeichnung ist eine als Beispiel dienende Ausführungsform der Erfindung dargestellt. Es zeigen:

Figur 1    in Explosionsdarstellung einen Gleiskettenabschnitt und

Figur 2    in Seitenansicht zwei miteinander verbundene Gleiskettenabschnitte.

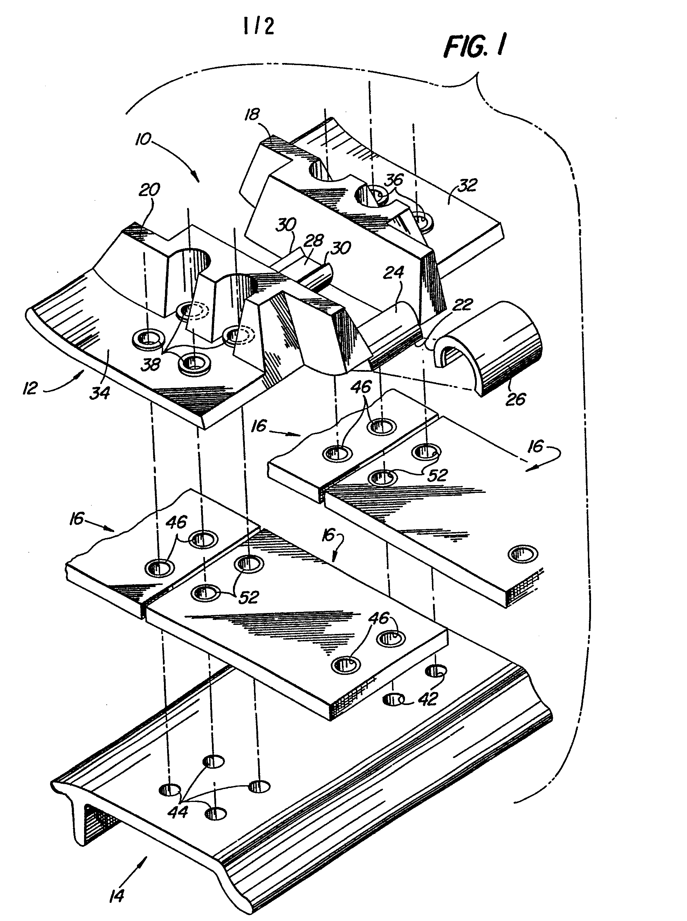

Der in Figur 1 dargestellte Gleiskettenabschnitt 10 besteht aus einem oberen Raupenglied 12 und einem unteren Gleiskettenschuh 14, die zwischen sich ein Paar mit Abstand nebeneinanderliegende, angenähert rechteckig ausgebildete, biegeelastische Biegeelemente 16 einspannen und zwar jeweils die vorderen bzw. hinteren Enden zweier aufeinanderfolgender Biegeelementepaare.

Das Raupenglied 12 besteht aus einem Paar mit seitlichem Abstand nebeneinander angeordneten, aufrechtstehenden Kettenlaschen 18, 20, deren rechten Enden über einen Kettenrad-Eingriffssteg 22 miteinander verbunden sind. Letzterer ist zum Eingriff in die Zahnlücken eines nicht dargestellten Kettenrades bestimmt und besteht aus einem Quersteg 24 in Form eines massiven Halbzylinders, dessen obere zylindrische Fläche von einer Verschleißkappe 26 abgedeckt ist, die teilzylindrisch ausgebildet ist, im Querschnitt angenähert C-förmig ist und sich über mehr als 180 Umfangsgrad sowie über die volle Länge des Quersteges 24 erstreckt. Die beiden Kettenlaschen 18,20 sind zwischen ihren beiden Enden noch über einen zweiten Quersteg 28 miteinander verbunden, der bezogen auf das nicht dargestellte Kettenrad als Zahnlücken-Reinigungssteg ausgebildet ist und auf seiner Oberseite zwei sich über die Steglänge erstreckende Reinigungsrippen 30 aufweist. Jede Kettenlasche 18,20 weist ein unteres Plattenteil 32,34 auf, in denen zwei Satz von jeweils vier Vertikalbohrungen 36,38 vorgesehen sind.

Der Gleiskettenschuh 14 weist einen flachen Mittelabschnitt 40 auf, der unterhalb von den Plattenteilen 32,34 liegt und mit zwei Satz von jeweils vier Vertikalbohrungen 42,44 bestückt ist, die mit den vorstehend genannten Bohrungen 36,38 des Raupengliedes 12 fluchten.

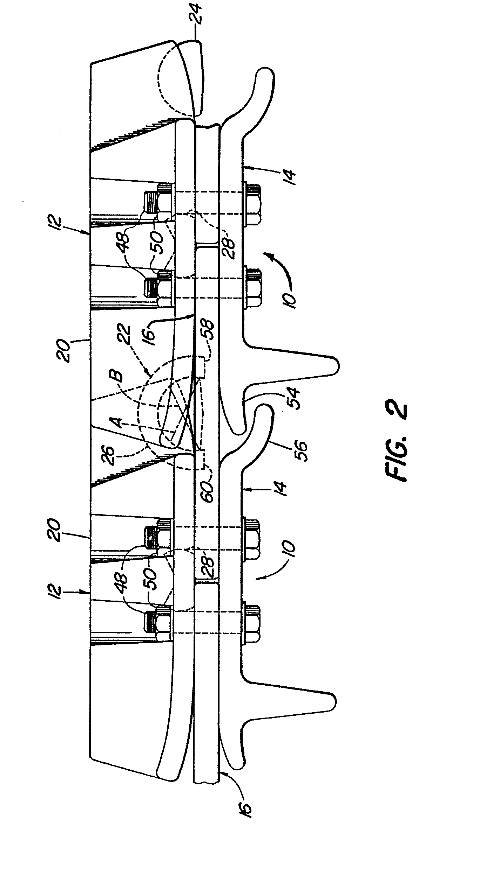

Die Biegeelemente 16 weisen im Bereich ihrer ersten Enden Bohrungen 46 auf, wobei diese Bohrungen 46 des einen biegeelastischen Elementes mit den vorstehend genannten Bohrungen 36,42 fluchten, während die Bohrungen 46 des daneben liegenden Biegeelementes 16 des gleichen Paares mit den vorstehend genannten Bohrungen 38,44 fluchten. Durch die jeweils miteinander fluchtenden Bohrungen sind Schraubbolzen 48 gesteckt, die über auf ihre oberen Enden aufgeschraubten Muttern 50 angezogen werden können, so daß Raupenglied 12 und Gleiskettenschuh 14 beidseitig gegen die Biegeelemente 16 gepreßt werden. Dabei werden gleichzeitig auch die hinteren Enden des die Verbindung mit dem benachbarten Gleiskettenabschnitt herstellenden Biegeelementenpaares eingeklemmt, wie Figur 2 erkennen läßt.

Figur 2 zeigt weiterhin, daß der Kettenrad-Eingriffssteg 22 vertikal oberhalb der sich überlappenden Endteile 54,56 der Gleiskettenschuhe 14 zweier benachbarter Gleiskettenabschnitte 10 liegt. Die freien Längsränder der Verschleißkappe 26 sind mit dem Bezugszeichen 58,60 gekennzeichnet und liegen jeweils oberhalb der genannten Endteile 54,56, so daß die Verdrehbewegung der Verschleißkappe 26 auf der Querleiste 24 begrenzt ist. Der Querschnitt der Querleiste 24, gekennzeichnet durch die Linie A, ist gleich dem lichten Abstand zwischen den beiden Längsrändern 58,60 der Verschleißkappe 26. Eine gleichartige Querschnittsdimension ergibt sich bei der Linie B. Bei allen unterhalb der Linien A oder B liegenden Punkten der Querleiste 24 ist die größere Querschnittsdimension des Quersteges 24 größer als auf den Linien A oder B, während bei allen unterhalb dieser Linien befindlichen Punkte des Quersteges 24 die größere Querschnittsdimension des Quersteges kleiner ist als auf den
Linien A oder B. Die Begrenzung der Verdrehung der Verschleißkappe 26 auf dem Quersteg 24 wird durch die benachbarten Gleiskettenschuhe 14 so bewirkt, daß die freien Längsränder 58,60 der
Verschleißkappe jeweils unterhalb der Linien A, B liegen, so daß
die Verschleißkappe 26 ihre Montagelage so lange einnimmt, wie
die benachbarten Gleiskettenschuhe festgezogen sind. Wird der
eine oder aber der benachbarte Gleiskettenschuh 14 gelöst oder
aber vollständig abgebaut, läßt sich die Verschleißkappe 26 in
der entsprechenden Richtung so weit verdrehen, bis einer der
beiden freien Längsränder 58,60 oberhalb der Linien A oder B
liegt; die Verschleißkappe 26 läßt sich dann von der Querleiste 24 abziehen.

Gr/Gru.

# Patentanwälte GRAMM + LINS

Dipl.-Ing. Prof. Werner Gramm
Dipl.-Phys. Edgar Lins **0085299**

D-3300 Braunschweig

DEERE & COMPANY

Moline, Illinois 61265

U S A

Telefon: (05 31) 8 00 79
Telex: 09 52 620

Anwaltsakte 324-55 EP-1
Datum 5.Jan.1983

Patentansprüche:

1. Gleiskettenabschnitt (10) einer endlosen, aus einer Vielzahl derartiger Gleisabschnitte bestehenden Gleiskette für ein Gleiskettenfahrzeug, bestehend aus einem mit einem Gleiskettenschuh (14) verbundenen Raupenglied (12), das ein Paar mit Abstand nebeneinanderliegende Kettenlaschen (18,20) aufweist, die durch zwei zum Eingriff in die Zahnlücken eines Kettenrades bestimmte Querstege (24,28) miteinander verbunden sind, von denen der erste Quersteg (24) eine sich um zumindest 180° erstreckende zylindrische Oberfläche aufweist, die von einer teilzylindrischen, im Querschnitt angenähert C-förmig ausgebildeten Verschleißkappe (26) um mehr als 180° lösbar umgriffen ist, d a d u r c h g e k e n n z e i c h n e t, daß die Höhe des ersten Quersteges (24) kleiner ist als sein Zylinderdurchmesser und höchstens so groß ist wie der lichte Abstand zwischen den freien Längsrändern (58,60) der Verschleißkappe (26), deren einer Längsrand (60) dicht oberhalb der Oberfläche (40) des Gleiskettenschuhs (14) desselben Gleiskettenabschnitts (10) und deren anderer Längsrand (58) dicht oberhalb der Oberfläche des hinteren Endteils (54) des benachbarten Gleiskettenschuhs liegen.

- 2 -

- 2 -

2. Gleiskettenabschnitt nach Anspruch 1, gekennzeichnet durch folgende Merkmale:

a) Ein Paar mit Abstand nebeneinanderliegende, angenähert rechteckig ausgebildete, biegeelastische Biegeelemente (16), die im Bereich ihrer sich jeweils gegenüberliegenden Enden erste und zweite Bohrungspaare (46,52) aufweisen;

b) das Raupenglied (12) sowie der Gleiskettenschuh (14) spannen zwischen sich die Enden zweier aufeinanderfolgender Biegeelementepaare (16) ein, wobei das erste Bohrungspaar (46) des einen Biegeelementenpaares (16) mit dritten und vierten Bohrungspaaren (42,44,36,38) und das zweite Bohrungspaar (52) des folgenden Biegeelementenpaares (16) mit fünften und sechsten Bohrungspaaren (42,44,36,38) im Gleiskettenschuh (14) und Raupenglied (12) fluchten;

c) erste und zweite Paare von Verbindungsmitteln (48,50) sind durch die miteinander fluchtenden Bohrungen (42,44,46,52, 36,38) des Gleiskettenschuhs (14), der Biegeelemente (16) sowie des Raupengliedes (12) geführt und spannen Raupenglied und Gleiskettenschuh beidseitig gegen die Biegeelemente;

d) der erste, im Querschnitt angenähert halbkreisförmig ausgebildete Quersteg (24) des Raupengliedes (12) liegt zwischen den beiden Biegeelementen (16) eines Paares.

Patentanwälte
G r a m·m   +   L i n s
Gr/Gru.

FIG. 1

FIG. 2